# EUROPÄISCHE PATENTSCHRIFT

(11) **EP 2 491 083 B1**
(45) Veröffentlichungstag und Bekanntmachung des Hinweises auf die Patenterteilung: **25.06.2014**
(21) Anmeldenummer: 10768017.5
(22) Anmeldetag: 19.10.2010
(51) Int. Cl.: C08L 65/00

(54) **FOLIE AUS POLYARYLENETHERKETON**
FILM MADE OF POLYARYLEETHERKETONE
FEUILLE EN POLYARYLÈNE ÉTHER CÉTONE

(30) Priorität: 21.10.2009 DE 102009045892
(43) Veröffentlichungstag der Anmeldung: 29.08.2012
(73) Patentinhaber: Evonik Degussa GmbH, 45128 Essen (DE)
(72) Erfinder: BLASCHKE, Jörg, 42857 Remscheid (DE); LÜTZELER, Kirsten, 48153 Münster (DE); ZINK, Walter, 48149 Münster (DE); WILLEMANN, Ricardo Luiz, 200030 (CN); SALWICZEK, Kathrin, 45768 Marl (DE); SCHAEFER, Georg, 45711 Datteln (DE)
(86) Internationale Anmeldenummer: PCT/EP2010/065714
(87) Internationale Veröffentlichungsnummer: WO 2011/048093

(56) Entgegenhaltungen:
- WO-A1-99/44959
- WO-A1-2010/101822
- RU-C2- 2 222 123
- US-A1- 2005 070 657
- US-B1- 6 236 061
- US-B1- 6 927 249

## Beschreibung

Die Erfindung betrifft eine Folie aus Polyarylenetherketon, die für verschiedene technische Anwendungen verwendet werden kann, beispielsweise für flexible Leiterplatten.

Die Herstellung und Verwendung von Folien aus Polyarylenetherketonen ist Stand der Technik. Die Folien werden für vielfältige technische Anwendungen eingesetzt, beispielsweise als Isolierstoff oder als Träger von funktionellen Schichten. Hierbei werden, je nach Anforderungen, Polyarylenetherketone mit verschiedenen Füllstoffen und gegebenenfalls weiteren Polymeren zu Compounds bzw. Blends gemischt und diese dann zu Folien weiterverarbeitet. Mittlerweile sind Foliendicken von weniger als 10 µm realisiert. Im Fokus der Eigenschaftsprofile stehen vor allem hohe Medien- und Temperaturbeständigkeit bei gleichzeitig geringem Schrumpf- und Ausdehnungsverhalten sowie ein Höchstmaß an Einreiß- und Weiterreißfestigkeit.

Je nach Extrusionsprozessführung sind Polyarylenetherketone sowohl zu amorphen als auch zu teilkristallinen Folien verarbeitbar. Um möglichst geringen und gleichmäßigen Schrumpf zu erzielen, muss die Folie maximal teilkristallin hergestellt sein und eine möglichst geringe Orientierung der Polymermoleküle aufweisen. Bei der Extrusion kommt die amorphe Schmelze des Polyarylenetherketons aus der Düse auf die sogenannten Chill-Roll-Walzen und muss dort prozesstechnisch aufwendig in sehr engen Prozessfenstern zu maximal teilkristallinen Folien umgewandelt werden. Prozesstechnisch ist es bei diesem Verfahren jedoch kaum möglich, die Orientierungen der Polymermoleküle in der Folie komplett isotrop einzustellen. Somit entsteht hinsichtlich der Schrumpfeigenschaften ein unterschiedliches Bild, welches sich über die Breite der Folienbahn hinweg mitunter stark schwankend ändert und sich bei der weiteren Verarbeitung und Veredelung der Folien als störend bis hin zu nicht akzeptabel darstellen kann. Innerhalb einer teilkristallin extrudierten Polyarylenetherketonfolie können die Schrumpfwerte durchaus von Null bis zu mehreren Prozent schwanken, je nachdem wo Proben zur Schrumpfmessung aus der Folienbahn entnommen werden. Gerade bei der Weiterverarbeitung bzw. Anwendung in höheren Temperaturbereichen ist es aber wichtig, dass die Folien eine möglichst hohe Formstabilität aufweisen.

Die Folie, die Gegenstand der vorliegenden Erfindung ist, wird bei relevanten Anwendungen, etwa bei der Weiterverarbeitung zu flexiblen Leiterplatten (flexible printed circuit boards, FCB), mit einer Metallfolie laminiert. Hierbei muss gewährleistet sein, dass bei Temperaturänderungen während des Herstellungsprozesses oder im Laufe der Serieneinsatzbelastung die erforderliche Planlage des Laminats erhalten bleibt. Das Laminat darf also z. B. nicht einrollen oder sich wellen. Hierzu müssen die Flächenausdehnungskoeffizienten der aufeinander fixierten dünnen Polyarylenetherketon- und Metallfolien nahezu identisch sein.

In der EP 1 314 760 A1 wird eine Folie zur Verwendung in gedruckten Schaltkreisen beschrieben, die aus einer Polyarylenetherketon-Formmasse bestehen kann. Die Formmasse enthält 15 bis 50 Gew.-% eines blättchenförmigen Füllstoffs, der beispielsweise Bornitrid sein kann. Durch diesen Zusatz werden der Schrumpf bei der Herstellung sowie die thermische Ausdehnung verringert, so dass die Folie sich für die Herstellung eines Laminats mit einer Kupferfolie eignen soll.

Die EP 1 234 857 A1 offenbart eine Formmasse für die Herstellung von Folien für FCBs auf Basis z. B. von Polyetheretherketon (PEEK), bei der durch einen Zusatz eines blättchenförmigen Füllstoffs mit bestimmten Parametern (vorzugsweise Glimmer; genannt ist auch Talkum) der Schrumpf sowie die thermische Ausdehnung verringert sind. Entsprechende Offenbarungen bezogen auf Talkum bzw. saures Magnesiummetasilikat finden sich in der JP 2007-197715A, der JP 2003-128943A sowie der JP 2003-128944A.

Die WO 2007/107293 beschreibt einen Dehnungsmessstreifen, bei dem die Trägerschicht aus einer PEEK-Formmasse besteht, die mit Talkum oder Bornitrid gefüllt ist. Eine gemeinsame Verwendung dieser beiden Füllstoffe ist nicht offenbart.

Die JP 2003-128931A schließlich beschreibt eine Formmasse zur Herstellung von Folien für FCBs auf Basis einer Vielzahl von Polymeren, beispielsweise Polyarylenetherketon. Die Formmasse ist mit 5 bis 50 Gew.-% an saurem Magnesiummetasilikat gefüllt. Darüber hinaus kann eine Reihe weiterer Füllstoffe enthalten sein, wobei Bornitrid als eine Möglichkeit genannt ist. Die Kombination Polyarylenetherketon/saures Magnesiummetasilikat/Bornitrid ist jedoch nicht explizit offenbart.

Die WO 2010/101822 offenbart eine Folie, die aus drei Schichten aus jeweils einer Formmasse zusammengesetzt ist, wobei die beiden äußeren Schichten Füllstoffe enthalten. Die Basispolymere der einzelnen Schichten können aus einer Liste ausgewählt werden, die Polyarylenetherketon enthält.

Die US 6 927 249 offenbart eine Wärmeenergie absorbierende und auch wieder freisetzende Kunststoffzusammensetzung, die ein höher schmelzendes Matrixmaterial sowie ein niedriger schmelzendes "phase transition material" enthält. Daneben können optional noch ein wärmeleitfähiges Additiv sowie ein verstärkendes Additiv enthalten sein.

Die US 2005/070657 offenbart eine Formmasse, die ein organisches Polymer, Single-Wall Nanotubes sowie einen leitfähigen Füllstoff enthält, während die US 6 236 061 eine füllstoffhaltige Folie mit niedrigem thermischem Ausdehnungskoeffizient beschreibt.

Die WO 99/44595 sowie die RU 2 222 123 C2 beschreiben Glasfasern, die mit Bornitrid oder Talkumpulver als Gleitmittel beschickt sind, zur Herstellung von Laminaten.

Die Aufgabe der Erfindung besteht darin, ausgehend vom Stand der Technik eine Folie aus einer Polyarylenetherketon-Formmasse zur Verfügung zu stellen, die gegenüber dem Stand der Technik einen geringeren Schrumpf sowie einen verringerten thermischen Flächenausdehnungskoeffizienten aufweist.

Diese Aufgabe wird gelöst durch eine Folie mit einer Dicke von 5 bis 1200 µm, vorzugsweise 8 bis 600 µm und besonders bevorzugt 10 bis 400 µm, die eine Schicht aus einer Formmasse enthält, die folgende Komponenten umfasst:
a) 60 bis 96 Gew.-Teile, bevorzugt 65 bis 94 Gew.-Teile, besonders bevorzugt 70 bis 92 Gew.-Teile und insbesondere bevorzugt 75 bis 90 Gew.-Teile Polyarylenetherketon,
b) 2 bis 25 Gew.-Teile, bevorzugt 4 bis 22 Gew.-Teile, besonders bevorzugt 6 bis 19 Gew.-Teile und insbesondere bevorzugt 8 bis 16 Gew.-Teile hexagonales Bornitrid sowie
c) 2 bis 25 Gew.-Teile, bevorzugt 4 bis 22 Gew.-Teile, besonders bevorzugt 6 bis 19 Gew.-Teile und insbesondere bevorzugt 8 bis 16 Gew.-Teile Talkum,
   wobei die Summe der Gewichtsteile der Komponenten a), b) und c) 100 beträgt.
   Das Polyarylenetherketon (PAEK) enthält Einheiten der Formeln

   (-Ar-X-) und (-Ar'-Y-),

   wobei Ar und Ar' einen zweiwertigen aromatischen Rest darstellen, vorzugsweise 1,4-Phenylen, 4,4'-Biphenylen sowie 1,4-, 1,5- oder 2,6-Naphthylen. X ist eine elektronenziehende Gruppe, bevorzugt Carbonyl oder Sulfonyl, während Y eine andere Gruppe wie O, S, CH₂, Isopropyliden oder dergleichen darstellt. Hierbei sollten mindestens 50 %, bevorzugt mindestens 70 % und besonders bevorzugt mindestens 80 % der Gruppen X eine Carbonylgruppe darstellen, während mindestens 50 %, bevorzugt mindestens 70 % und besonders bevorzugt mindestens 80 % der Gruppen Y aus Sauerstoff bestehen sollten.

In der insbesondere bevorzugten Ausführungsform bestehen 100 % der Gruppen X aus Carbonylgruppen und 100 % der Gruppen Y aus Sauerstoff. In dieser Ausführungsform kann das PAEK beispielsweise ein Polyetheretherketon (PEEK; Formel I), ein Polyetherketon (PEK; Formel II), ein Polyetherketonketon (PEKK; Formel III) oder ein Polyetheretherketonketon (PEEKK; Formel IV) sein, jedoch sind natürlich auch andere Anordnungen der Carbonyl- und Sauerstoffgruppen möglich.

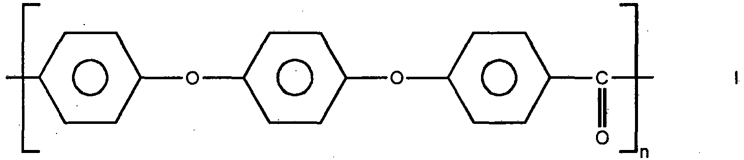

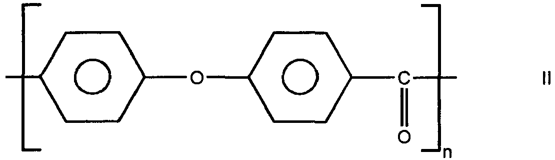

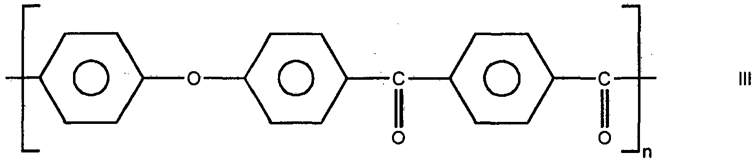

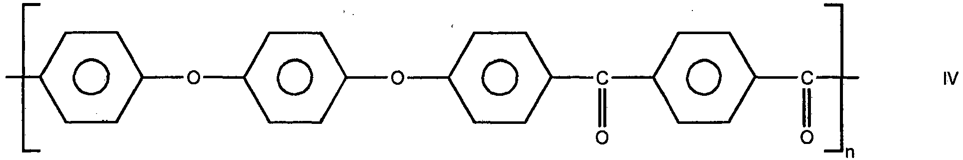

Das PAEK ist im Allgemeinen teilkristallin, was sich beispielsweise in der DSC-Analyse durch Auffinden eines Kristallitschmelzpunkts Tₘ äußert, der größenordnungsmäßig in den meisten Fällen um 300 °C oder darüber liegt. Im Allgemeinen gilt, dass Sulfonylgruppen, Biphenylengruppen, Naphthylengruppen oder sperrige Gruppen Y, wie z. B. eine Isopropylidengruppe, die Kristallinität verringern.

In einer bevorzugten Ausführungsform beträgt die Viskositätszahl, gemessen entsprechend DIN EN ISO 307 an einer Lösung von 250 mg PAEK in 50 ml 96-gewichtsprozentiger H₂SO₄ bei 25 °C, etwa 20 bis 150 cm³/g und bevorzugt 50 bis 120 cm³/g.

Das PAEK kann gemäß der sogenannten nucleophilen Route durch Polykondensation von Bisphenolen und organischen Dihalogenverbindungen und/oder von Halogenphenolen in einem geeigneten Lösemittel in Gegenwart einer Hilfsbase hergestellt werden; das Verfahren ist beispielsweise in der EP-A-0 001 879, der EP-A-0 182 648 und der EP-A-0 244 167 beschrieben. Das PAEK kann aber auch nach der sogenannten elektrophilen Route in stark saurem bzw. Lewis-saurem Milieu hergestellt werden; dieses Verfahren ist beispielsweise in der EP-A-1 170 318 sowie in der dort zitierten Literatur beschrieben.

Hexagonales Bornitrid besteht aus Schichten einer planaren, hexagonalen Wabenstruktur, bei der die B- und N-Atome jeweils abwechselnd vorkommen. Es ist somit dem Graphit vergleichbar; die physikalischen Eigenschaften von hexagonalem Bornitrid und Graphit sind sich sehr ähnlich. Im Unterschied zu Graphit leitet jedoch hexagonales Bornitrid erst bei sehr hohen Temperaturen den elektrischen Strom. Hexagonales Bornitrid ist in Form verschiedener Typen kommerziell erhältlich.

In einer bevorzugten Ausführungsform beträgt die Partikelgröße des hexagonalen Bornitrids bei d₅₀ mindestens 0,1 µm, mindestens 0,2 µm, mindestens 0,3 µm oder mindestens 0,4 µm sowie maximal 10 µm, maximal 8 µm, maximal 6 µm, maximal 5 µm, maximal 4 µm, maximal 3 µm oder maximal 2 µm. Entsprechend beträgt die Partikelgröße bei d₉₈ mindestens 0,3 µm, mindestens 0,6 µm, mindestens 0,7 µm oder mindestens 0,8 µm sowie maximal 20 µm, maximal 16 µm, maximal 12 µm, maximal 10 µm, maximal 8 µm, maximal 6 µm oder maximal 4 µm. Sowohl bei d₅₀ als auch bei d₉₈ können alle Ober- und Untergrenzen miteinander kombiniert werden.

Die Partikelgröße wird hier mittels Laserbeugung gemäß ISO 13320 gemessen, beispielsweise mit einem Mastersizer 2000 der Firma Malvern Instruments GmbH.

Talkum ist ein natürlich vorkommendes Mineral der allgemeinen chemischen Zusammensetzung Mg₃Si₄O₁₀(OH)₂. Es ist ein kristallines Magnesiumsilikathydrat, das zur Familie der Schichtsilikate gehört. Talkum ist näher beschrieben beispielsweise in Kirk-Othmer, Encyclopedia of Chemical Technology, 4th Edition, Vol. 23, John Wiley & Sons 1997, Seiten 607 bis 616.

In einer bevorzugten Ausführungsform beträgt die Partikelgröße des Talkums bei d₅₀ mindestens 0,1 µm, mindestens 0,2 µm, mindestens 0,3 µm oder mindestens 0,4 µm sowie maximal 10 µm, maximal 8 µm, maximal 6 µm, maximal 5 µm, maximal 4 µm, maximal 3 µm oder maximal 2 µm. Entsprechend beträgt die Partikelgröße bei des mindestens 0,3 µm, mindestens 0,6 µm, mindestens 0,7 µm oder mindestens 0,8 µm sowie maximal 20 µm, maximal 16 µm, maximal 12 µm, maximal 10 µm, maximal 8 µm, maximal 6 µm oder maximal 4 µm. Sowohl bei d₅₀ als auch bei d₉₈ können alle Ober- und Untergrenzen miteinander kombiniert werden.

Die Partikelgröße wird hier gemäß ISO 13317, Part 3 (X-ray Gravitational Technique) gemessen, beispielsweise mit einem Sedigraph 5120 der Firma Micromeritics Instrument Corporation.

Die Polyarylenetherketon-Formmasse kann darüber hinaus, falls erforderlich, auch weitere Komponenten enthalten wie beispielsweise Verarbeitungshilfsmittel, Stabilisatoren oder Flammschutzmittel. Art und Menge sind so zu wählen, dass der erfinderische Effekt nicht wesentlich beeinträchtigt wird. Zur besseren Anbindung der Füllstoffe und zur Verbesserung der Einreißfestigkeit können darüber hinaus zusätzlich Silane und/oder oligomere Siloxane zugegeben werden, beispielsweise in Anteilen von 0,5 bis 2,5 Gew.-% und vorzugsweise von 1 bis 2 Gew.-%, bezogen auf die Gesamtrezeptur.

In einer Ausführungsform besteht die Folie nur aus der Schicht aus der anspruchsgemäßen Polyarylenetherketon-Formmasse. Sie kann nach folgendem Verfahren hergestellt werden:
a) In einem Compoundierschritt wird Polyarylenetherketon mit hexagonalem Bornitrid und Talkum in den anspruchsgemäßen Anteilen in der Schmelze gemischt;
b) in einem Extrusionsschritt wird die Schmelze der anspruchsgemäßen Formmasse in einem Breitschlitzwerkzeug extrudiert;
c) in einem Verfestigungsschritt wird die durch Extrusion ausgeformte Folienbahn abgezogen, auf Kühlwalzen aufgelegt und abgekühft.

Im Compoundierschritt kann die Schmelze ausgetragen, abgekühlt und granuliert werden. Das Granulat wird dann im Extrusionsschritt im Extruder unter Scherung wieder aufgeschmolzen. Man kann jedoch auch einstufig arbeiten, indem sich der Extrusionsschritt in der gleichen Maschine direkt an den Compoundierschritt anschließt. Auf diese Weise wird das Granulieren vermieden, was kostengünstiger ist; darüber hinaus kann hier eine bessere Folienqualität erzielt werden.

Im Verlauf des Compoundier- oder Extrusionsschrittes kann die Schmelze der Formmasse, falls erforderlich, filtriert werden, um Stippen zu entfernen.

In einem anschließenden Konfektionierungsschritt kann in einer Wicklereinheit der Randbeschnitt und die Aufwicklung durchgeführt werden.

In einer weiteren Ausführungsform enthält die Folie zusätzlich eine Metallschicht. Die Folie ist in diesem Fall vorteilhafterweise ein Laminat aus einer einschichtigen Folie aus der anspruchsgemäßen PAEK-Formmasse und einer Metallfolie. Die Laminierung kann unter Zuhilfenahme eines Klebers durchgeführt werden. Derartige Kleber sind Stand der Technik; meist handelt es sich um epoxi-, acrylat-, polyimidbasierte oder UV-härtende Systeme oder um Copolyester. Für Hochtemperaturanwendungen müssen diese Kleber hochtemperaturfähig sein. Die Kleber müssen in der Regel vernetzt werden, damit sie beim Löten und später im Serieneinsatz den Anforderungen und den Qualitätsansprüchen genügen. Um die geforderte Funktionalität der Laminate sicherzustellen, müssen spezifizierte Haftkräfte zwischen PAEK- und Metallfolie vor und nach verschiedenen Alterungsprozessen erzielt werden. Daher werden diese Kleber nach der Laminatherstellung getempert, wobei sie dauerhaft und stabil vernetzen. Dies ist mit der erfindungsgemäßen Folie vorteilhaft möglich, da eine Wellung bzw. ein Einrollen für den Anwendungsfall ausreichend unterdrückt wird.

Falls für den gewählten Anwendungszweck die Haftung nicht ausreichen sollte, kann die Folie aus der Polyarylenetherketon-Formmasse auch einer Oberflächenbehandlung unterzogen werden, beispielsweise einer Coronabehandlung oder einer Plasmabehandlung.
Die Metallschicht kann jedoch auch anders aufgebracht werden, beispielsweise elektrolytisch oder mittels Vakuumabscheidungsverfahren. Alternativ hierzu können auch leitfähige Pasten, die beispielsweise mit Silber, Kupfer oder Carbon dotiert sind, mittels Drucktechnik aufgetragen werden. Die Folie aus der PAEK-Formmasse kann nicht nur einseitig, sondern auch beidseitig eine Metallschicht tragen.

Die Metallschicht weist im Allgemeinen eine Dicke von 0,1 bis 150 µm auf. Bei Verwendung einer Metallfolie ist der Bereich von 17 bis 105 µm bevorzugt und bei elektrolytischer Vakuumabscheidung der Bereich von 0,1 bis 40 µm.

Das Metall ist üblicherweise Kupfer, es kann aber auch Aluminium oder ein anderes Metall sein.

Überraschenderweise wurde festgestellt, dass bei gleichzeitiger Verwendung von hexagonalem Bornitrid und Talkum als Füllstoff eine synergistische Wirkung eintritt. Um den gewünschten Effekt zu erzielen, muss daher insgesamt eine geringere Menge an Füllstoff zugesetzt werden. Deshalb können erfindungsgemäße Folien mit verbesserten mechanischen Eigenschaften hergestellt werden, beispielsweise mit verbesserter Einreißfestigkeit und Weiterreißfestigkeit.

Die erfindungsgemäße Folie wird beispielsweise für Leiterplatten und hier insbesondere für flexible Leiterplatten verwendet. Bei letzterer Anwendung beträgt die Dicke der PAEK-Folienschicht vorzugsweise 6 bis 150 µm, besonders bevorzugt 12 bis 125 µm, insbesondere bevorzugt 18 bis 100 µm und ganz besonders bevorzugt 25 bis 75 µm.

Die metallbeschichtete PAEK-Folie kann als sogenanntes Basislaminat für die Herstellung von flexiblen Leiterplatten verwendet werden. Im ersten Schritt wird das Leiterbild auf die Metallschicht gedruckt bzw. durch photolithographische Verfahren aufgebracht. Anschließend wird im Ätz- und Strippverfahren das Leiterbild erzeugt. Nun kann je nach Applikation sehr unterschiedlich verfahren werden. Weitere Prozessschritte sind beispielsweise Bohren, Stanzen, Oberflächenveredelung, Durchkontaktierung mittels Galvanisieren, Multilayer in Vakuumpressen erzeugen, Deckfolien unter Druck und Temperatur laminieren, Isolations- bzw. Lötstopplack drucken, verschiedene Lötprozesse (z. B. Lotpastendruck oder Bestückung mit Bauteilen) sowie Kontaktteilbestückung durch Crimpen, Piercen oder andere mechanische Verfahren. Die entsprechende Herstellung von flexiblen Leiterplatten ist Stand der Technik.

Mit den erfindungsgemäßen Folien kann eine isotrope Folienformstabilität, d. h. sowohl in Längs- als auch in Querrichtung, von weniger als 0,1 % Dimensionsänderung bei Temperaturen bis 260 °C erreicht werden. Um die Verhältnisse bei der Herstellung eines FCB zu simulieren, wird hierbei an einer 20 x 20 cm großen Folienprobe gemessen und zwar vor und nach einer 5 Minuten dauernden Temperaturbelastung von 260 °C. Dazu wird über 2 Längen und 2 Breiten, an insgesamt 8 Messpunkten, der Schrumpf der flächig ausgebreiteten Folienprobe bestimmt. Damit soll die maximale Temperaturbelastung der Folie unter sogenannten Lötbadbedingungen nachgebildet werden, wobei der Belastungszeitraum großzügig lang bemessen wurde. Er beträgt hier mehr als das Fünffache der in gängigen Lötprozessen auftretenden Lötzeiten bei einer maximalen Temperaturbelastung von 260 °C. Dadurch wird sichergestellt, dass die Folie nicht in ihren Grenzbereich der Belastbarkeit gerät und die maximalen 0,1 % Schrumpf nach Lötung in longitudinaler und transversaler Richtung auf keinen Fall überschritten werden.

Auch bei anderen Anwendungen werden durch die erreichte hohe Formstabilität beispielsweise mechanische Spannungen in Materialien, Bauteilen und Lötstellen reduziert, was zu einer deutlichen Qualitätsverbesserung in der Produktion sowie im Serieneinsatz fertiger Produkte führt. Geeignete Anwendungen sind beispielsweise Kabelisolierungen, Wickelfolien für Kondensatoren oder Abdeck- bzw. Trägerfolien für Photovoltaikelemente.

Die Erfindung wird im Folgenden beispielhaft erläutert.

### Compoundieren:

Das Mischen und Granulieren der Materialien PEEK, Bornitrid (BN) und Talk erfolgte auf einer Anlage der Fa. Coperion (ZSK 26) mit einer gleichläufigen Doppelschnecke. Die Füllstoffe wurden über den ersten Einzug zugegeben; die Zugabe kann aber auch über Sidefeeder erfolgen. Die Verarbeitungstemperatur lag bei etwa 370 °C, der Durchsatz bei 8 bis 10 kg/h.

### Folienherstellung:

Im Anschluss erfolgte die Herstellung von 50 µm dicken Folien auf einer Folienextrusionsanlage der Fa. Dr. Collin mit einer Dreizonenschnecke mit folgenden Prozessparametern: Verarbeitungstemperatur etwa 370 °C, Durchsatz ca. 2 bis 3 kg/h, Abzugsgeschwindigkeit 5 m/min,
Walzentemperaturen: 180 bis 250 °C.

### Prüfung:

### a) Biegung:

Ein DIN A4-Abschnitt der erhaltenen 50 µm-Folie wurde mit einer Kupferfolie (35 µm) und Epoxidharzkleber (7 µm) laminiert und anschließend 48 h bei 120 °C getempert. Im Anschluss wurde der Höhenabstand der vier Ecken des Laminats zum Untergrund gemessen und gemittelt.

### b) Thermomechanische Analyse (TMA):

Ein Streifen des Folienmusters wurde mit einem Skalpell zurecht geschnitten (16 mm lang, 4 mm breit) und in die Klemmen eines TMA-Gerätes (Netzsch TMA 202) eingespannt. Mit dem Gerät wurde die Längenänderung in Abhängigkeit von der Temperatur im Temperaturbereich 80 - 120 °C bestimmt (relevanter Temperaturbereich für die Laminierung).

### c) Schrumpf:

Aus dem Folienmuster wurde ein Quadrat ausgeschnitten und an zwei Stellen die Breite quer und längs mit einem Electronic Scale-Messgerät vermessen. Der Probekörper wurde 5 Minuten bei 260 °C getempert; anschließend wurde die Änderung der Breite in den jeweiligen Richtungen bestimmt (Angabe in %). Der Wert soll möglichst nahe bei Null liegen.

Die Ergebnisse sind in der Tabelle 1 wiedergegeben.

**Tabelle 1: Formmassen und Ergebnisse**

| | Zusammensetzung [Gew.-%] | | | Biegung [mm] | TMA (techn. alpha) | Schrumpf [%] | |
|---|---|---|---|---|---|---|---|
| | PEEK | Talk | BN | | | längs | quer |
| Vergleichsbeispiel 1 | 90 | 10 | | 36 | 37 | -0,32 | -0,20 |
| Vergleichsbeispiel 2 | 90 | | 10 | 34 | 38 | -0,10 | -0,08 |
| Beispiel 1 | 90 | 5 | 5 | 31 | 35 | -0,05 | -0,03 |

Der Vergleich lässt erkennen, dass erfindungsgemäß die Biegung des Laminats, die thermische Ausdehnung der Folie sowie der Schrumpf der Folie verbessert werden.

## Patentansprüche

1. Formmasse, die folgende Komponenten enthält:
a) 60 bis 96 Gew.-Teile Polyarylenetherketon,
b) 2 bis 25 Gew.-Teile hexagonales Bornitrid sowie
c) 2 bis 25 Gew.-Teile Talkum,
wobei die Summe der Gewichtsteile der Komponenten a), b) und c) 100 beträgt.

2. Formmasse gemäß Anspruch 1,
**dadurch gekennzeichnet,**
**dass** das Polyarylenetherketon ein Polyetheretherketon (PEEK), ein Polyetherketon (PEK), ein Polyetherketonketon (PEKK) oder ein Polyetheretherketonketon (PEEKK) ist.

3. Formmasse gemäß einem der vorhergehenden Ansprüche,
**dadurch gekennzeichnet,**
**dass** die Partikelgröße des Bomitrids gemäß ISO 13320 bei d₅₀ mindestens 0,1 µm und maximal 10 µm und bei d₉₈ mindestens 0,3 µm und maximal 20 µm beträgt.

4. Formmasse gemäß einem der vorhergehenden Ansprüche,
**dadurch gekennzeichnet,**
**dass** die Partikelgröße des Talkums gemäß ISO 13317, Part 3 bei d₅₀ mindestens 0,1 µm und maximal 10 µm und bei d₉₈ mindestens 0,3 µm und maximal 20 µm beträgt.

5. Formmasse gemäß einem der vorhergehenden Ansprüche, **dadurch gekennzeichnet, dass** sie zusätzlich Silane und/oder oligomere Siloxane enthält.

6. Folie mit einer Dicke von 5 bis 100 µm, **dadurch gekennzeichnet, dass** sie eine Schicht aus einer Formmasse gemäß einem der vorhergehenden Ansprüche enthält.

7. Folie gemäß Anspruch 6,
**dadurch gekennzeichnet,**
**dass** sie zusätzlich eine Metallschicht enthält.

8. Folie gemäß einem der Ansprüche 6 und 7, **dadurch gekennzeichnet, dass** die Metallschicht durch Auflaminieren, elektrolytisch oder mittels eines Vakuumabscheidungsverfahrens aufgebracht wurde.

9. Folie gemäß einem der Ansprüche 7 und 8,
**dadurch gekennzeichnet,**
**dass** die Metallschicht aus Kupfer oder Aluminium besteht.

10. Folie gemäß Anspruch 6,
**dadurch gekennzeichnet,**
**dass** eine leitfähige Paste aufgetragen ist.

11. Verfahren zur Herstellung einer Folie gemäß Anspruch 6,
**dadurch gekennzeichnet,**
**dass** es folgende Verfahrensschritte enthält:
a) Schmelzemischen von 60 bis 96 Gew.-Teilen Polyarylenetherketon mit 2 bis 25 Gew.-Teilen hexagonalem Bornitrid und 2 bis 25 Gew.-Teilen Talkum, wobei die Summe der Gew.-Teile 100 beträgt,
b) Extrudieren der Schmelze in einem Breitschlitzwerkzeug,
c) Verfestigung der durch Extrusion ausgeformten Folienbahn durch Auflegen auf Kühlwalzen.

12. Verfahren gemäß Anspruch 11,
**dadurch gekennzeichnet,**
**dass** sich in der gleichen Maschine der Extrusionsschritt direkt an den Compoundierschritt anschließt.

13. Flexible Leiterplatte, die eine Folie gemäß einem der Ansprüche 6 bis 10 oder die gemäß einem der Ansprüche 11 und 12 hergestellte Folie enthält.

14. Verwendung der Folie gemäß Anspruch 6 oder der gemäß einem der Ansprüche 11 und 12 hergestellten Folie für Kabelisolierungen, als Wickelfolie für Kondensatoren oder als Abdeck- bzw. Trägerfolie für Photovoltaikelemente.

## Claims

1. Moulding composition which comprises the following components:
a) from 60 to 96 parts by weight of polyarylene ether ketone,
b) from 2 to 25 parts by weight of hexagonal boron nitride, and
c) from 2 to 25 parts by weight of talc,
where the sum of the parts by weight of components a), b), and c) is 100.

2. Moulding composition according to Claim 1,
**characterized in that**
the polyarylene ether ketone is a polyether ether ketone (PEEK), a polyether ketone (PEK), a polyether ketone ketone (PEKK), or a polyether ether ketone ketone (PEEKK).

3. Moulding composition according to either of the preceding claims,
**characterized in that**
the d₅₀ particle size of the boron nitride to ISO 13320 is at least 0.1 µm and at most 10 µm, and the corresponding d₉₈ is at least 0.3 µm and at most 20 µm.

4. Moulding composition according to any of the preceding claims,
**characterized in that**
the d₅₀ particle size of the talc to ISO 13317, Part 3 is at least 0.1 µm and at most 10 µm, and the corresponding d₉₈ is at least 0.3 µm and at most 20 µm.

5. Moulding composition according to any of the preceding claims, **characterized in that** it also comprises silanes and/or oligomeric siloxanes.

6. Foil of thickness from 5 to 100 µm, **characterized in that** it comprises a layer made of a moulding composition according to any of the preceding claims.

7. Foil according to Claim 6,
**characterized in that**
it also comprises a metal layer.

8. Foil according to either of Claims 6 and 7,
**characterized in that** the metal layer has been applied by lamination, electrolytically or by means of a vacuum deposition process.

9. Foil according to either of Claims 7 and 8, **characterized in that**
the metal layer is composed of copper or aluminium.

10. Foil according to Claim 6,
**characterized in that**
a conductive paste has been applied.

11. Process for producing a foil according to Claim 6,
**characterized in that**
it comprises the following steps:
a) mixing in the melt of from 60 to 96% parts by weight of polyarylene ether ketone with from 2 to 25 parts by weight of hexagonal boron nitride and with from 2 to 25 parts by weight of talc, where the parts by weight give a total of 100 parts by weight,
b) extruding the melt in a slot die, and
c) placing the foil web shaped by extrusion onto chill rolls to harden the web.

12. Process according to Claim 11,
**characterized in that**
the extrusion step follows the compounding step directly in the same machine.

13. Flexible circuitboard which comprises a foil according to any of Claims 1 to 6, or the foil produced according to either of Claims 11 and 12.

14. Use of the foil according to Claim 6 or of the foil produced according to either of Claims 11 and 12, for cable insulation, as winding foil for capacitors, or as protective-covering foil or, respectively, backing foil for photovoltaic elements.

## Revendications

1. Matière à mouler, qui contient les composants suivants :
a) 60 à 96 parties en poids de polyarylène-éthercétone,
b) 2 à 25 parties en poids de nitrure de bore hexagonal ainsi que
c) 2 à 25 parties en poids de talc,
la somme des parties en poids des composants a), b) et
c) étant égale à 100.

2. Matière à mouler selon la revendication 1,
**caractérisée en ce que**,
la polyarylène-éthercétone est une polyéther-éthercétone (PEEK), une polyéthercétone (PEK), une polyéthercétonecétone (PEKK) ou une polyétheréther-cétonecétone (PEEKK).

3. Matière à mouler selon l'une quelconque des revendications précédentes,
**caractérisée en ce que**
la taille de particule du nitrure de bore selon ISO 13320 est pour d₅₀ d'au moins 0,1 µm et d'au maximum 10 µm et pour d₉₈ d'au moins 0,3 µm et d'au maximum 20 µm.

4. Matière à mouler selon l'une quelconque des revendications précédentes,
**caractérisée en ce que**
la taille de particule du talc selon ISO 13317, partie 3 est pour d₅₀ d'au moins 0,1 µm et d'au maximum 10 µm et pour d₉₈ d'au moins 0,3 µm et d'au maximum 20 µm.

5. Matière à mouler selon l'une quelconque des revendications précédentes, **caractérisée en ce qu'**elle contient en outre des silanes et/ou des siloxanes oligomères.

6. Film ayant une épaisseur de 5 à 100 µm, **caractérisé en ce qu'**il contient une couche à base d'une matière à mouler selon l'une quelconque des revendications précédentes.

7. Film selon la revendication 6,
**caractérisé en ce**
**qu'**il contient en outre une couche métallique.

8. Film selon l'une quelconque des revendications 6 et 7, **caractérisé en ce que** la couche métallique a été appliquée par stratification, par électrolyse ou au moyen d'un procédé de dépôt sous vide.

9. Film selon l'une quelconque des revendications 7 et 8,
**caractérisé en ce que**
la couche métallique consiste en cuivre ou aluminium.

10. Film selon la revendication 6,
**caractérisé en ce**
**qu'**une pâte conductrice est appliquée.

11. Procédé pour la fabrication d'un film selon la revendication 6,
**caractérisé en ce**
**qu'**il comporte les étapes de processus suivantes :
a) mélange à l'état fondu de 60 à 96 parties en poids de polyarylène-éthercétone avec 2 à 25 parties en poids de nitrure de bore hexagonal et 2 à 25 parties en poids de talc, la somme des parties en poids étant égale à 100,
b) extrusion de la masse fondue dans un outil à filière plate,
c) solidification de la bande de film formée par extrusion, par dépôt sur des cylindres refroidisseurs.

12. Procédé selon la revendication 11,
**caractérisé en ce que**
dans la même machine l'étape d'extrusion fait immédiatement suite à l'étape de compoundage.

13. Carte à circuits imprimés flexible, qui contient un film selon l'une quelconque des revendications 6 à 10 ou le film produit selon l'une quelconque des revendications 11 et 12.

14. Utilisation du film selon la revendication 6 ou du film produit selon l'une quelconque des revendications 11 et 12, en tant qu'isolations de câbles, en tant que film enroulé pour condensateurs ou en tant que film de recouvrement ou de support pour éléments photovoltaïques.
